# EUROPÄISCHE PATENTANMELDUNG

(11) **EP 1 286 259 A1**
(43) Veröffentlichungstag der Anmeldung: **26.02.2003**
(21) Anmeldenummer: 01440275.4
(22) Anmeldetag: 21.08.2001
(51) Int. Cl.: G06F 9/30

(54) **Modulares Rechnersystem**

(71) Anmelder: ALCATEL, 75008 Paris (FR)
(72) Erfinder: Pertry, Carl Roger, 71282 Hemmingen (DE); Schulz, Thomas, 74321 Bietigheim-Bissingen (DE); Meyer, Heiko, 71686 Remseck/Pattonville (DE)
(74) Vertreter: Menzietti, Domenico, Dipl.-Ing

(57) **Zusammenfassung**

Aufgabe der Erfindung ist es, eine integrierte Schaltung zur Verfügung zu stellen, die einen Prozessor und mindestens ein Modul enthält und für die Module benötigte Register bereitstellt sowie einen Zugriff auf diese Register. Durch erfindungsgemäße Konzentrierung der benötigten Register in einer zentralen Registerbank (9), die wie der Prozessor (17) und die Module (3, 13, 14) an einen schnellen AMBA-AHB Bus angeschlossen ist, werden mehrere Vorteile erzielt: Zum einen ist ein schnellerer Zugriff auf jedes Register möglich. Zum anderen wird die Platzierung der Register sowie das Routing für die Register vereinfacht. Dadurch lässt sich insbesondere Chipfläche einsparen, was zu Kosteneinsparung bei der Herstellung führt sowie eine höhere Packungsdichte ermöglicht. Ferner ist nun ein langsamer AMBA-APB Bus optional geworden.

## Beschreibung

Die Erfindung betrifft eine integrierte Schaltung.

Integrierte Schaltungen sind z.B. als System-on-Chip auf einem ASIC ausgeführt; ASIC = Application Specific Integrated Circuit. Ein ASIC beinhaltet spezielle Schaltkreise, die an Kundenwünsche adaptiert sind. Diese erfüllen spezielle Aufgaben. In der Telekommunikation dienen sie beispielsweise der Verarbeitung von VoIP- Signalen, DSL-, ATM-, SDH-, SONET, UMTS-, GSM-, LMDS- oder ISDN-Signalen; VoIP = Voice over Internet Protocol, DSL = Digital Subscriber Line, ATM = Asynchronous Transfer Mode, SDH = Synchronous Digital Hierarchy, SONET = Synchronous Optical Network, UMTS = Universal Mobile Telekommunikation System, GSM = General system Mobile, LMDS = Local Multipoint Digital System, ISDN = Integrated Services Digital Network. Sie dienen somit der Verarbeitung von Sprache, Daten, Video, Internet-Webpages, etc.

Eine integrierte Schaltung hat z.B. eine spezielle Prozessorplattform zur Ausführung von generellen, aber auch applikationsspezifischen Aufgaben. Diese Prozessorplattform kann für beliebige Anwendungen genutzt werden; die selbe Prozessorplattform beispielsweise in DSL-Chips, ATM-Chips, etc. Sie beinhaltet einen Prozessor und stellt Rechenkapazität zur Verfügung.

Die Prozessorplattform hat mehrere Bausteine, wobei einige Bausteine an einen schnellen AMBA-AHB Bus angeschlossen sind, z.B. ein Prozessor, ein ROM Controller, ein RAM Controller, und andere Bausteine an einen langsamen AMBA-APB Bus angeschlossen sind, z.B. ein Interrupt Controller, ein Real Time Counter; ROM = Read Only Memory, RAM = Random Access Memory. Der Frage welcher Baustein an welchen Bus angeschlossen wird, hängt von der Zugriffgeschwindigkeit, der Verarbeitungsgeschwindigkeit und der Häufigkeit der Verwendung des Bausteins ab.

Für manche Bausteine, wie z.B. den ROM Controller und den RAM Controller, die im folgenden als Module bezeichnet werden, sind Steuerregister erforderlich. Die übliche Lösung sieht für jedes Modul ein, oder mehrere am langsamen AMBA-APB Bus angeschlossene Steuerregister vor.

Aufgabe der Erfindung ist es, ein integrierte Schaltung zur Verfügung zu stellen, die einen Prozessor und mindestens ein Modul enthält und einen alternativen Zugriff auf für die Module benötigte Register bereitstellt.

Gelöst wird diese Aufgabe durch eine integrierte Schaltung nach Anspruch 1.

Durch Konzentrierung der benötigten Register in einer zentralen Registerbank, die an den schnellen AMBA-AHB Bus angeschlossen ist, werden mehrere Vorteile erzielt: Zum einen ist ein schnellerer Zugriff auf jedes Register möglich. Zum anderen wird die Platzierung der Register sowie das Routing für die Register vereinfacht. Dadurch lässt sich insbesondere Chipfläche einsparen, was zu Kosteneinsparung bei der Herstellung führt sowie eine höhere Packungsdichte ermöglicht. Ferner ist nun der langsame AMBA-APB Bus optional geworden. Die Steuerregister für die ROM und RAM Controller werden stets benötigt. Sind sie am AMBA-APB Bus angeschlossen, so muss dieser auch stets bereitgestellt werden. Die am AMBA-APB Bus angeschlossenen Bausteine sind aber nicht in jeder Ausgestaltung eines ASIC notwendig. Sind diese in einer speziellen Ausgestaltung nicht gewünscht, so kann bei Verwendung einer zentralen, an den AMBA-AHB Bus angeschlossenen Registerbank auch auf den AMBA-APB Bus sowie die Brücke zwischen beiden Bussen beim Design und der Herstellung verzichtet werden. Dies führt wieder zu einer Steigerung der Packungsdichte und reduziert somit die benötigte Chipfläche, die dann z.B. für andere Bausteine genutzt werden kann. Eine zentrale Registerbank ermöglicht somit eine erhöhte Flexibilität beim Design von ASICs.

Vorteilhafte Ausgestaltungen sind den abhängigen Ansprüchen und der nachfolgenden Beschreibung zu entnehmen.

Im folgenden wird die Erfindung anhand eines Ausführungsbeispiels und unter Zuhilfenahme einer Figur erläutert.

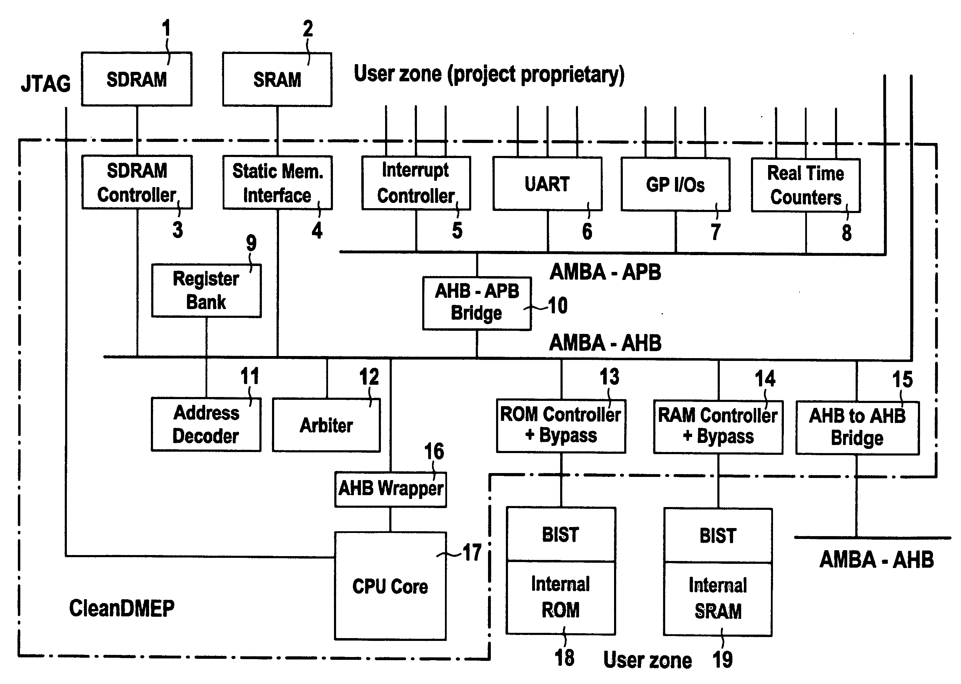

Die Figur zeigt einen schematisch dargestellten Ausschnitt aus einer erfindungsgemäßen integrierten Schaltung.

Der Ausschnitt zeigt eine mit CleanDMEP bezeichnete Prozessorplattform und mehrere mit der Prozessorplattform verbundene Module; CleanDMEP = Clean Design Methodology for Embedded Processors. Die Prozessorplattform ist eine allgemeine Plattform und kann für beliebige Verarbeitungen eingesetzt werden, z.B. in der Telekommunikation, im Maschinenbau, in der Luft- und Raumfahrt, etc; in der Telekommunikation beispielsweise bei allen Formen des XDSL, bei UMTS, VolP, etc.

Die integrierte Schaltung ist z.B. als System-on-Chip auf einem ASIC ausgeführt. Sie beinhaltet zum einen die Prozessorplattform mit einem Prozessor 17, ein oder mehrere AHB Master und/oder Slave Module 3, 13, 14 und eine zentrale Registerbank 9, die über einen Bus AMBA-AHB miteinander verbunden sind. Modul 3 ist z.B. als SDRAM Controller ausgeführt, Modul 13 als ROM Controller und Modul 14 als RAM Controller. Die Registerbank 9 beinhaltet die drei Steuerregister für die drei Module 3, 13, 14. Jedes Modul 3, 13, 14 hat über den Bus AMBA-AHB Zugriff auf das ihm zugeordnete Register. Der Bus ist z.B. als schneller Bus ausgelegt, z.B. als AMBA-AHB Bus.

Im folgenden wird der allgemeine Aufbau der Prozessorplattform erläutert.

Die Prozessorplattform beinhaltet ein als SDRAM Controller ausgeführtes Modul 3, das zum einen mit dem schnellen, internen Bus AMBA-AHB verbunden ist und zum anderen mit einem internen, aber außerhalb der Prozessorplattform angeordneten SDRAM 1. Intern bedeutet innerhalb der integrierten Schaltung, extern außerhalb der integrierten Schaltung. Der SDRAM Controller steuert den Zugriff aufs SDRAM 1 und führt die erforderliche Konversion aufs Busprotokoll durch. Das SDRAM 1 kann auch außerhalb der integrierten Schaltung angeordnet werden, also extern.

Die Prozessorplattform beinhaltet ferner ein Static Memory Interface 4, das zum einen mit dem schnellen, internen Bus AMBA-AHB verbunden ist und zum anderen mit einem internen, aber außerhalb der Prozessorplattform angeordneten SRAM 2. Das Static Memory Interface 4 steuert den Zugriff aufs SRAM 2 und führt die erforderliche Konversion aufs Busprotokoll durch. Das SRAM 2 kann auch außerhalb der integrierten Schaltung angeordnet werden, also extern.

Ferner ist ein Interrupt Controller 5 vorgesehen, der zum einen mit einem langsamen, internen, z.B. als AMBA-APB ausgeführten Bus verbunden ist und zum anderen mindestens eine Schnittstelle zu einem internen oder externen, aber außerhalb der Prozessorplattform angeordneten Modul aufweist. Der Interrupt Controller 5 dient dazu, Interrupts von Modulen auserhalb der Plattform mit dem Prozessor zu verbinden.

Ferner ist ein UART 6 vorgesehen, der zum einen mit dem langsamen, internen AMBA-APB Bus verbunden ist und zum anderen eine Schnittstelle zu einem externen Host-Prozessor, der aber außerhalb der Prozessorplattform angeordnet ist, aufweist. Der UART 6 dient dazu, Daten zwischen dem externen Host Prozessor und dem internen Prozessor (17) zu uebertragen.

Ferner ist ein GP I/O 7 vorgesehen, der zum einen mit dem langsamen, internen AMBA-APB Bus verbunden ist und zum anderen mindestens eine Schnittstelle zu einem internen oder externen, aber außerhalb der Prozessorplattform angeordneten Modul aufweist. Der GP I/O 7 dient dazu, Steuerinformationen zwischen Modulen auserhalb der Plattform und dem interenen Prozessor (17) zu uebertragen; GP I/O = General Purpose In/Out.

Ferner ist ein Real Time Counter 8 vorgesehen, der zum einen mit dem langsamen, internen AMBA-APB Bus verbunden ist und zum anderen mindestens eine Schnittstelle zu einem internen oder externen, aber außerhalb der Prozessorplattform angeordneten Modul aufweist. Der Real Time Counter 8 dient als Timer, der mit dem Systemclock laeuft.

Des weiteren ist eine Register Bank 9 vorgesehen, die mit dem schnellen AMBA-AHB Bus verbunden ist. Die Register Bank 9 stellt Register für mehrere Module zur Verfügung, darunter z.B. RAM Controller 14 und SDRAM Controller 3. Register können z.B. vorgesehen sein für Module 3, 4, 11, 12, 13, 14, 15. Die Registerbank 9 stellt einen für alle Register gemeinsamen Zugang zum AMBA-AHB Bus zur Verfügung. Durch diese einzige Schnittstelle lässt sich die Registerbank 9 vereinfacht implementieren.

Ein Arbiter 12, der mit dem schnellen AMBA-AHB Bus verbunden ist, dient dazu, bei gleichzeitigem Zugriff mehrerer Master auf den schnellen Bus, diese Zugriffe zu priorisieren und in der priorisierten Reihenfolge abzuarbeiten.

Der Prozessor 17 ist z.B. als Mikroprozessor oder als Digitaler Signalprozessor ausgeführt. Er ist eventuell über einen AHB Wrapper mit dem schnellen AMBA-AHB Bus verbunden. Der AHB Wrapper 16 führt bei Bedarf die nötige Konversion der Protokolle durch.

Das Modul 13 ist z.B. als ROM Controller ausgeführt, der zum einen mit dem schnellen AMBA-AHB Bus verbunden ist und zum anderen mit einem außerhalb der Prozessorplattform angeordneten internen ROM 18, das auch ein BIST enthalten kann; BIST = Build-In Self Test.

Der ROM Controller steuert den Zugriff aufs interne ROM 18 und führt die erforderliche Konversion auf Busprotokoll durch.

Das Modul 14 ist als RAM Controller ausgeführt und zum einen mit dem schnellen, internen Bus AMBA-AHB verbunden und zum anderen mit einem internen, aber außerhalb der Prozessorplattform angeordneten SRAM 19. Der RAM Controller steuert den Zugriff aufs SRAM 19 und führt die erforderliche Konversion auf Busprotokoll durch. Das SRAM 19 kann auch ein BIST enthalten.

Ferner ist eine Brücke 10 vorgesehen. Brücke 10 verbindet den schnellen AMBA-AHB Bus mit dem langsamen AMBA-APB Bus. Über die Brücke 10 wird somit eine Verbindung zwischen den am AMBA-AHB Bus angeschlossenen Modulen und den am AMBA-APB Bus angeschossenen Modulen hergestellt. So hat Prozessor 17 über Brücke 10 z.B. Zugriff auf den Interrupt Controller 5. Die Aufteilung mit zwei Bussen mit unterschiedlichen Verarbeitungsgeschwindigkeiten hat den Vorteil, dass langsame Zugriffe nicht schnelle Zugriffe behindern. Brücke 10, AMBA-APB Bus und die daran angeschlossenen Module sind optional. Werden die Funktionalitäten der Module nicht benötigt können sie und der AMBA-APB Bus sowie die Brücke 10 beim Design weggelassen werden, was zu einer Platzeinsparung und zur Reduzierung von Herstellungskosten führt.

Der Prozessor 17 hat einen Verbindung zu einem JTAG= Joint Test Action Group. Das JTAG Interface kann zum Debuggen der SW auf dem internen Prozessor verwendet werden, aber auch waehrend der Fertigungskontrolle des ASICs.

Der AMBA-APB Bus kann intern, außerhalb der Prozessorplattform weitergeführt sein und gegebenenfalls auch extern, außerhalb der integrierten Schaltung.

Der AMBA-AHB Bus kann intern, außerhalb der Prozessorplattform weitergeführt sein und gegebenenfalls auch extern, außerhalb der integrierten Schaltung.

Im Ausführungsbeispiel ist eine spezielle Prozessorplattform dargestellt. Die Erfindung kann auf jede Prozessorplattform angewendet werden, insbesondere eine Prozessorplattform mit weniger oder mehr Elementen als die in der Fig. dargestellte. Die integrierte Schaltung kann auch mehr als einen Prozessor, mehr als einen Steuereingang und mehr als einen externen Speicher aufweisen. Sind beispielsweise zwei Prozessoren über eine gemeinsame Adressverwaltung verwaltet, so können ein Steuereingang und ein externer Speicher für beide Prozessoren ausreichend sein. Außer der speziellen Prozessorplattform können auf der integrierten Schaltung noch weitere Prozessoren und Module angeordnet sein, die auch den Großteil der integrierten Schaltung, z.B. 80%, ausmachen können, so dass z.B. nur 20% auf die Prozessorplattform entfällt. Die integrierte Schaltung kann auch zwei oder mehr Prozessorplattformen beinhalten.

Im Ausführungsbeispiel sind die Module als ROM-, RAM- und SDRAM-Controller ausgeführt. Ein Modul kann z.B. auch ein DRAM, PROM, EPROM oder EEPROM ausgeführt sein; PROM = Programmable ROM, EPROM = Erasable PROM.

Beim Ausführungsbeispiel sind chipintern AMBA Busse verwendet und chipextern AMBA Busse und/oder ein PCI Bus. Chipintern können z.B. auch verwendet werden: CoreConnect Bus, CoreFrame Bus, FISPbus oder IPbus. Chipextern können z.B. auch verwendet werden: VMEbus, USB Bus, usw.

Anstelle eines oder zwei Busse zur chipinternen Verbindung der Bausteine können auch drei oder mehr Busse verwendet werden, z.B. ein Extra-Bus für die Verknüpfung des Arbiters mit mehreren Bausteinen. Die Prozessoren sind beispielsweise als ARM, Intel oder AMD Prozessoren ausgeführt.

Abkürzungen:
AMBA = Advanved Micro-controller Bus Architecture,
AHB = Advanced High-performance Bus,
APB = Advanced Peripheral Bus,
ARM = Advanced RISC Machine,
VHDL = VHSIC Hardware Description Language.

## Patentansprüche

1. Integrierte Schaltung, insbesondere ein System-on-Chip, beinhaltend eine Prozessorplattform (CleanDMEP) mit einem Prozessor (17), mindestens einem Modul (3, 13, 14) und einer Registerbank (9), die über einen Bus (AMBA-AHB) miteinander verbunden sind, wobei die Registerbank (9) mindestens ein, einem Modul (3, 13, 14) zugeordnetes Register beinhaltet.

2. Integrierte Schaltung nach Anspruch 1, **dadurch gekennzeichnet, dass** mindestens ein Modul (3, 13, 14) als Controller ausgeführt ist.

3. Integrierte Schaltung nach Anspruch 1, **dadurch gekennzeichnet, dass** die Registerbank (9) mindestens zwei Steuerregister für mindestens zwei Module (3, 13, 14) beinhaltet.

4. Integrierte Schaltung nach Anspruch 1, **dadurch gekennzeichnet, dass** in der Registerbank (9) alle für die Module (3, 13, 14) benötigten Register zentral angeordnet sind.

5. Integrierte Schaltung nach Anspruch 1, **dadurch gekennzeichnet, dass** ein Modul (3, 13, 14) als ROM Controller und ein weiteres Modul (3, 13, 14) als RAM Controller ausgeführt ist.

6. Integrierte Schaltung nach Anspruch 1, **dadurch gekennzeichnet, dass** der Bus (AMBA-AHB) als AMBA-AHB Bus ausgeführt ist.

7. Integrierte Schaltung nach Anspruch 6, **dadurch gekennzeichnet, dass** der Prozessor (17) über einen AHB Wrapper (16) mit dem AMBA-AHB Bus verbunden ist.

8. Integrierte Schaltung nach Anspruch 6, **dadurch gekennzeichnet, dass** in der Prozessorplattform (CleanDMEP) mindestens ein Baustein (5, 6, 7, 8) vorgesehen ist, der über einen AMBA-APB Bus und eine Brücke (10) mit dem AMBA-AHB Bus verbunden ist.
